# FASCICULE DE BREVET EUROPEEN

(11) **EP 2 005 069 B1**
(45) Date de publication et mention de la délivrance du brevet: **10.01.2018**
(21) Numéro de dépôt: 07734249.1
(22) Date de dépôt: 10.04.2007
(51) Int. Cl.: F24D 11/02, F24D 3/08, F28D 20/00

(54) **DISPOSITIF DE CHAUFFAGE, RAFRAICHISSEMENT ET PRODUCTION D'EAU CHAUDE SANITAIRE PAR THERMOPOMPE ET RESERVE THERMIQUE A BASSE TEMPERATURE**
VORRICHTUNG ZUM ERWÄRMEN, KÜHLEN UND ERZEUGEN VON HÄUSLICHEM WARMWASSER UNTER VERWENDUNG EINER WÄRMEPUMPE UND EINES NIEDRIGTEMPERATURWÄRMESPEICHERS
DEVICE FOR HEATING, COOLING AND PRODUCING DOMESTIC HOT WATER USING A HEAT PUMP AND LOW-TEMPERATURE HEAT STORE

(30) Priorité: 11.04.2006 FR 0603473
(43) Date de publication de la demande: 24.12.2008
(73) Titulaire: Thorens Energies Sàrl, 1206 Genève (CH)
(72) Inventeur: DUPRAZ, Michel, Louis, F-74110 Morzine (FR)
(74) Mandataire: Poncet, Jean-François
(86) Numéro de dépôt international: PCT/IB2007/000930
(87) Numéro de publication internationale: WO 2007/116299

(56) Documents cités:
- EP-A- 0 017 975
- DE-A1- 19 929 692
- FR-A1- 2 505 990
- GB-A- 2 247 072
- US-A- 4 111 259
- US-A- 4 466 256

## Description

### DOMAINE TECHNIQUE DE L'INVENTION

La présente invention concerne les systèmes de chauffage, climatisation ou production d'eau chaude sanitaire de locaux individuels ou collectifs.

L'invention concerne plus particulièrement les dispositifs de chauffage à pompe à chaleur et capteur thermique en relation avec une source froide et une source chaude.

On connaît déjà des installations à pompe à chaleur et échangeur enterré, assurant le chauffage et la production d'eau chaude de locaux individuels ou collectifs. Par exemple, le document FR 2 505 990 A1 décrit une telle installation à capteur solaire et échangeur enterré raccordés en série avec une thermopompe. Dans ce document, l'échangeur enterré, appelé capteur d'énergie géothermique, est un long tuyau enterré dans lequel circule de l'eau. Le tuyau est ainsi en contact direct avec la terre dans laquelle il est enfoui.

De telles installations ne sont pas entièrement satisfaisantes :
1. elles conduisent à des consommations plus élevées lorsque la température directe (air ou solaire) est supérieure à celle de la terre ;
2. elles nécessitent la mise en place d'échangeurs importants et onéreux :
   - environ 1m de profondeur par m² chauffé pour un échangeur vertical, ce qui implique des forages profonds et onéreux,
   - environ 2m² de surface par m² chauffé pour un échangeur horizontal, ce qui occupe une surface souvent trop importante.

Le non-respect des bonnes règles de dimensionnement conduit à l'appauvrissement thermique du sol avec risque de gel, de déformation ou de panne. L'efficacité d'une telle installation dépend fortement de la nature du sol. En particulier, dans un sol sec, l'échangeur enterré a une très faible capacité thermique, et un mauvais couplage thermique avec le sol environnant. En utilisation comme source froide, sa température s'abaisse rapidement lorsque la température atmosphérique décroît et nécessite l'extraction de calories de la source froide. La thermopompe fonctionne alors entre des sources chaude et froide dont l'écart de températures augmente, ce qui dégrade son rendement.

On connaît également des thermopompes à évaporateur à air extérieur ventilé.

De telles installations ne sont pas entièrement satisfaisantes car elles nécessitent un dispositif de dégivrage de l'échangeur extérieur et voient en outre leurs performances thermiques et énergétiques diminuées au fur et à mesure que la température de l'air extérieur s'abaisse, imposant ainsi un autre dispositif de chauffage pour les périodes froides.

On connaît aussi des installations de chauffage et de production d'eau chaude sanitaire par capteurs solaires, par exemple décrites dans le document US 4,111,259. Ce document enseigne l'utilisation d'une réserve thermique sous forme d'un réservoir contenant de l'eau, pour emmagasiner les calories des capteurs solaires le jour et les restituer la nuit.

De telles installations ne sont pas entièrement satisfaisantes, car d'une part les surfaces de capteurs solaires doivent être très importantes donc très coûteuses, et d'autre part elles nécessitent un autre dispositif de chauffage pour les périodes froides non ensoleillées.

Le document GB 2 247 072 A décrit un dispositif de chauffage ou de climatisation d'un local conforme au préambule de la revendication 1. Dans ce document, la paroi supérieure d'un réservoir de stockage thermique est fermée et isolée.

Le document US 4,466,256 A décrit une installation de réserve de froid dans le sol, dans laquelle une réserve thermique est enfouie dans le sol et sa face supérieure est fermée par une paroi étanche à l'eau et rigide.

### EXPOSE DE L'INVENTION

Le problème proposé par la présente invention est de concevoir un dispositif de chauffage et/ou de climatisation à thermopompe qui soit à la fois efficace dans toutes les conditions climatiques, et peu coûteux et peu encombrant en termes d'installation des échangeurs enterrés.

L'invention vise en particulier à accroître sensiblement l'efficacité des échangeurs enterrés, de manière à leur conférer une grande efficacité thermique sous un volume restant raisonnable.

L'invention vise à concevoir un tel dispositif dans lequel l'échangeur enterré conserve en permanence, dans les conditions habituelles d'utilisation, une température suffisamment haute pour ne pas dégrader exagérément le rendement de la thermopompe.

Pour atteindre ces buts ainsi que d'autres, l'invention propose un dispositif de chauffage et/ou de climatisation d'une habitation ou d'un local, comprenant une thermopompe couplée thermiquement à un échangeur enterré, et dans lequel l'échangeur est contenu dans une réserve thermique enterrée, et la réserve thermique comporte une poche sous terre contenant un matériau perméable et de l'eau.

De la sorte, l'échangeur est en permanence en contact thermique étroit avec le contenu de la poche, l'eau présente en permanence dans la poche assurant ce bon contact thermique. La poche elle-même constitue une masse importante présentant une grande inertie thermique, de sorte que l'échangeur peut constituer, pour la thermopompe, une source froide à grande capacité.

La poche constitue un élément assurant le maintien de présence de l'eau, même dans le cas d'une utilisation dans un sol sec.

La présence d'eau donne en permanence à la réserve thermique une grande capacité thermique, du fait de la grande chaleur massique de l'eau. En outre, lors d'un fonctionnement du dispositif en période froide, on peut utiliser la réserve thermique jusqu'à des températures égales ou inférieures à 0°C. On profite alors de la chaleur latente de liquéfaction de l'eau, qui confère à la réserve thermique, au voisinage du 0°C, une capacité thermique encore beaucoup plus grande. En d'autres termes, l'échangeur pourra fonctionner comme source froide à 0°C pendant une longue durée, sans descendre en température au-delà de 0°C, et donc sans dégrader sensiblement le rendement de la thermopompe.

Dans la poche, le matériau perméable peut avantageusement être un matériau naturel tel que le sable, la terre, le gravier ou leurs mélanges. Ces matériaux sont aisément disponibles sur place, de sorte que la réserve thermique est réalisée à faible coût.

De préférence, la poche est recouverte de terre, pour l'isoler de l'atmosphère ambiante. Une hauteur de terre d'au moins 1 m peut être appropriée. Le fonctionnement de la réserve thermique, ainsi isolée, devient indépendant des variations climatiques, et bénéficie de la température moyenne du sol.

La poche comprend une enveloppe imperméable à l'eau, par exemple une enveloppe plastifiée. Selon l'invention, la poche est ouverte vers le haut, et peut être en forme de cuvette enterrée retenant le matériau perméable et l'eau autour de l'échangeur. On réalise ainsi en réalité une sorte de marais, dans lequel l'eau de pluie assure le maintien d'une quantité moyenne satisfaisante d'eau.

En alternative, la poche, également ouverte vers le haut, peut être en forme de tranchée allongée dans le sol.

Dans les deux cas, l'ouverture vers le haut autorise les variations de volume du contenu de la poche lors du gel ou du dégel pendant un fonctionnement au voisinage du 0°C.

Toutefois, lors de tels fonctionnements en gel et dégel, la matière située au-dessus de l'enveloppe subit des variations de volume qui tendent à déformer le sol au-dessus de l'enveloppe. Il peut ainsi se produire des gonflements, puis des creusements, qui tassent le matériau perméable et la terre qui le recouvre. La surface du sol se déforme, et cela peut être un inconvénient. On réduit ce phénomène en utilisant la forme de réserve thermique en tranchée. En effet, dans une forme en tranchée, les parois verticales de la tranchée, relativement proches l'une de l'autre, freinent les déplacements verticaux du matériau, et réduisent ainsi les effets de tassement.

Le dispositif selon l'invention peut fonctionner efficacement pour assurer le chauffage d'un local. On utilise pour cela une thermopompe unidirectionnelle. Toutefois, le dispositif de l'invention peut également fonctionner efficacement pour assurer une climatisation, c'est-à-dire le rafraîchissement du local. Pour cela, on prévoit d'utiliser une thermopompe réversible, la source froide étant alors constituée par le local lui-même.

De préférence, le couplage thermique entre la thermopompe et la réserve thermique peut être assuré par un circuit de captage à pompe de circulation de captage, et à fluide caloporteur de captage.

Le fluide caloporteur de captage peut être, par exemple, de l'eau glycolée. On évite ainsi les risques d'épandage d'un liquide polluant dans le sol, en cas de rupture du circuit de captage.

Le circuit de captage peut avantageusement comprendre en outre une structure d'échange extérieure parcourue par le fluide caloporteur de captage, avec une vanne de contrôle de débit du fluide caloporteur de captage dans la structure d'échange extérieure.

Par exemple, la structure d'échange extérieure peut comprendre un échangeur atmosphérique air/fluide caloporteur, et/ou un capteur solaire. On profite alors d'une meilleure efficacité d'une telle structure d'échange extérieure, dans certaines conditions climatiques.

Selon un mode de réalisation avantageux, le dispositif comprend en outre :
- des moyens d'échange thermique avec l'atmosphère intérieure du local à chauffer et/ou des moyens d'échange thermique avec un circuit d'eau chaude sanitaire,
- un circuit de chauffage à fluide caloporteur intermédiaire et pompe de circulation intermédiaire,
- des moyens de contrôle de débit de fluide caloporteur intermédiaire pour sélectivement assurer le couplage thermique des moyens d'échange thermique par le fluide caloporteur intermédiaire soit avec la thermopompe, soit avec d'autres capteurs tels que des capteurs solaires ou des échangeurs atmosphériques.

Dans un tel dispositif à moyens de contrôle de débit de fluide caloporteur intermédiaire, on peut avantageusement prévoir aussi des moyens de contrôle de couplage thermique de captage pour contrôler le couplage thermique entre la thermopompe et l'échangeur enterré, et des moyens de commande à processeur et programme enregistré pour piloter lesdits moyens de contrôle de couplage thermique de captage.

Le programme peut avantageusement contenir une séquence de chauffage par la thermopompe à partir de la réserve thermique, séquence au cours de laquelle l'eau contenue dans la réserve thermique est refroidie et peut passer de son état liquide à son état solide.

En alternative ou en complément, le programme peut avantageusement contenir une séquence de régénération de la réserve thermique, séquence au cours de laquelle l'eau contenue dans la réserve thermique est réchauffée par un capteur atmosphérique ou un capteur solaire.

En association avec des capteurs solaires, un dispositif à réserve thermique selon l'invention permet d'assurer la production d'eau chaude sanitaire soit de façon directe et gratuite pendant des journées suffisamment ensoleillées, soit de façon économique par la thermopompe à partir de la réserve thermique.

Les capteurs solaires peuvent être utilisés de deux façons dans le dispositif selon l'invention :
- en période suffisamment ensoleillée, ils assurent la production d'eau chaude sanitaire et régénèrent simultanément la réserve thermique,
- en période insuffisamment ensoleillée, ils alimentent encore la source froide de la thermopompe.

L'invention permet de réaliser d'importantes économies, et permet d'obtenir, par rapport à un chauffage traditionnel à consommation d'énergie électrique ou fossile, un coefficient de performance supérieur à 4 sur l'ensemble de la période de chauffage en zone climatique "Alpes", tout en occupant une surface de terrain réduite.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :
- la figure 1 est une vue schématique d'une installation de chauffage et de production d'eau chaude sanitaire selon un mode de réalisation du dispositif de la présente invention ;
- la figure 2 illustre la structure générale d'une installation de chauffage, de rafraîchissement et de production d'eau chaude sanitaire selon un second mode de réalisation du dispositif selon la présente invention ;
- la figure 3 est une vue schématique en coupe d'une structure de réserve thermique selon un premier mode de réalisation de l'invention ; et
- la figure 4 est une vue schématique en coupe d'une réserve thermique selon un second mode de réalisation de la présente invention.

### DESCRIPTION DES MODES DE REALISATION PREFERES

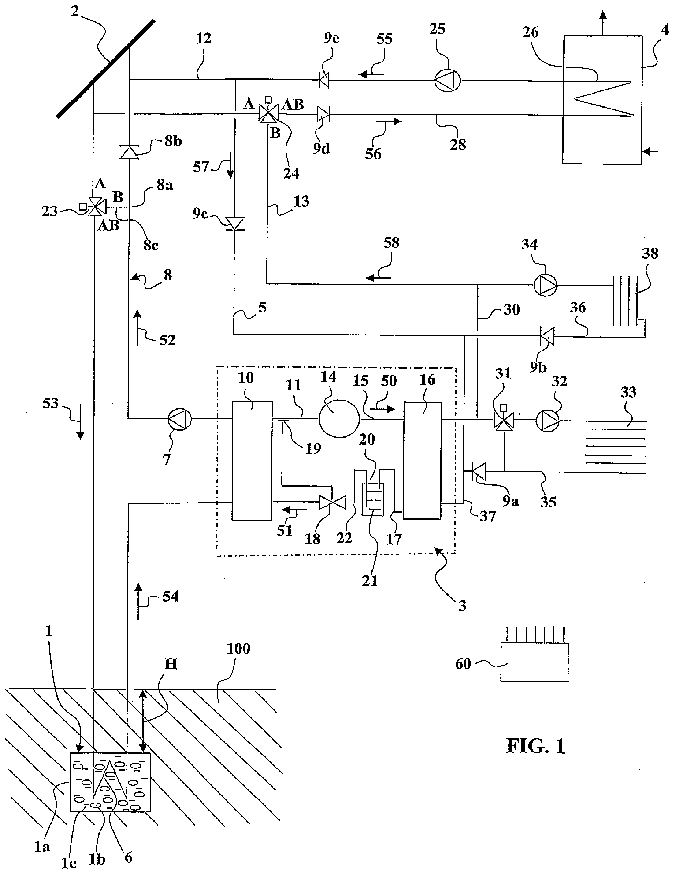

Dans le mode de réalisation de la figure 1, le dispositif de chauffage et/ou de climatisation selon l'invention comprend de manière générale une réserve thermique 1, un capteur solaire 2, une thermopompe 3, des moyens pour assurer le couplage thermique entre la thermopompe 3, la réserve thermique 1 et le capteur solaire 2, et des moyens pour assurer le couplage thermique entre la thermopompe 3 et les éléments à chauffer tels que l'atmosphère du local ou l'eau chaude sanitaire.

La réserve thermique 1 comporte une poche 1a enfouie dans le sol 100, recouverte d'une hauteur H de terre. La hauteur H est avantageusement supérieure ou égale à 1 m environ. Des exemples de structure de réserve thermique seront décrits plus loin. Dans tous les cas, la poche 1a contient un matériau perméable 1b et de l'eau 1c.

Dans le mode de réalisation illustré, le couplage thermique entre la thermopompe 3 et la réserve thermique 1 est assuré par un circuit de captage comprenant une pompe de circulation de captage 7 et une canalisation 8 de captage contenant un fluide caloporteur de captage tel que de l'eau glycolée ou un autre liquide qui ne gèle pas dans les conditions d'utilisation. A partir de la thermopompe 3, la pompe de circulation de captage 7 refoule le fluide caloporteur de captage par la canalisation de captage 8 vers le capteur solaire 2, puis vers la réserve thermique 1, puis à nouveau vers la thermopompe 3. Dans la réserve thermique 1, le fluide caloporteur de captage traverse un échangeur 6 qui assure l'échange thermique entre le fluide caloporteur de captage et les matières contenues dans la poche 1a. Entre la pompe de circulation 7 et le capteur solaire 2, on prévoit dans la canalisation de captage 8 un embranchement 8a entre un tronçon de canalisation à clapet anti-retour 8b qui conduit vers le capteur solaire 2 et un tronçon de dérivation 8c qui conduit à une vanne d'orientation 23 insérée dans la canalisation de captage 8 entre le capteur solaire 2 et la réserve thermique 1.

Dans la thermopompe 3, on distingue les quatre éléments essentiels d'une thermopompe habituelle, à savoir un évaporateur 10, un condenseur 16, un compresseur 14 et un détendeur 18.

Le compresseur 14 refoule un fluide frigorigène par une tuyauterie 15 dans le condenseur 16 de type à eau. Le fluide frigorigène condensé se dirige alors vers un réservoir 20 par une tuyauterie 17. Une tuyauterie 22 prélève le fluide frigorigène 21 du réservoir 20 et le distribue vers un détendeur thermostatique 18 ayant un bulbe 19 placé sur une tuyauterie 11 d'aspiration du compresseur 14. Le liquide détendu sortant du détendeur 18 est dirigé vers l'évaporateur 10. Par l'action du fluide caloporteur de captage provenant de la réserve thermique 1 et traversant l'évaporateur 10, le fluide frigorigène est évaporé et surchauffé dans l'évaporateur 10, et il sort par la tuyauterie d'aspiration 11 vers le compresseur 14.

Dans le condenseur 16, le fluide frigorigène perd ses calories en direction de l'utilisation, c'est-à-dire vers le local à chauffer ou vers l'eau chaude sanitaire à chauffer.

En considérant à nouveau le circuit de captage constitué par la canalisation de captage 8 et les différents éléments auxquels elle est raccordée, on comprend que le circuit de captage comporte une structure d'échange extérieure parcourue par le fluide caloporteur de captage, la structure d'échange extérieure comportant le capteur solaire 2. En alternative ou en complément, le capteur solaire 2 peut être remplacé ou complété par un échangeur atmosphérique air/fluide caloporteur, par exemple de structure connue.

La vanne d'orientation 23 constitue une vanne de contrôle du débit de fluide caloporteur de captage dans la structure d'échange extérieure.

Pour transmettre les calories du condenseur 16 vers l'utilisation, le dispositif comprend en outre des moyens d'échange thermique avec l'atmosphère intérieure du local ou de l'habitation ou avec un circuit d'eau chaude sanitaire.

Dans la réalisation illustrée sur la figure 1, les moyens d'échange thermique comprennent un réseau de distribution de chaleur à circulation d'eau. On distingue des pompes de circulation 32 et 34 qui alimentent, par des canalisations respectives 35 et 36 et un mélangeur 31, un plancher chauffant 33 et des radiateurs 38 représentés à titre d'exemple.

En parallèle, le condenseur 16 peut aussi alimenter, par une pompe de circulation 25, un échangeur 26 pour eau chaude sanitaire, la circulation d'eau étant contrôlée par une vanne d'orientation 24. Dans les canalisations, on prévoit des clapets anti-retour 9a, 9b, 9c, 9d et 9e tels qu'illustrés sur la figure 1, pour autoriser la circulation de fluide dans un seul sens et permettre les différentes étapes de fonctionnement des circuits de transmission d'énergie calorifique.

Un tel dispositif illustré sur la figure 1 peut fournir, selon les besoins, simultanément ou non, le chauffage et la production d'eau chaude sanitaire, que ce soit en production directe depuis le capteur solaire 2, ou en production indirecte depuis la réserve thermique 1 par l'intermédiaire de la thermopompe 3. Les vannes d'orientation 23 et 24, les pompes de circulation 7, 32, 34 et 25, et le compresseur 14 permettent de contrôler et piloter la circulation des fluides en fonction des étapes de fonctionnement.

Pendant une séquence « Chauffage », la vanne d'orientation 23 est rendue passante dans le sens A vers AB, et le fluide caloporteur de captage circule comme indiqué par les flèches 52, 53 et 54.

Pendant une séquence « Eau chaude sanitaire directe », la vanne d'orientation 23 est rendue passante de B vers AB. On utilise la vanne d'orientation 24 à l'état passant de A vers AB . La pompe de circulation 25 refoule par la tuyauterie 12 dans le capteur solaire 2 puis dans l'échangeur 26 du chauffe-eau 4 par la tuyauterie 28, comme indiqué par les flèches 55 et 56.

Pendant une séquence « Eau chaude indirecte », on utilise la vanne d'orientation 24 à l'état passant de B vers AB. La pompe de circulation 25 refoule par les tuyauteries 5 et 37 dans le condenseur 16 puis dans l'échangeur 26 du chauffe-eau 4 par les tuyauteries 30, 13 et 28, comme indiqué par les flèches 55, 56, 57 et 58.

Les éléments tels que les pompes de circulation 7, 32, 34 et 25, et les vannes d'orientation 23 et 24, constituent des moyens de contrôle de débit de fluide, pour contrôler le débit des fluides caloporteurs, afin de faire varier le couplage thermique entre la thermopompe 3 et d'une part les capteurs tels que le capteur solaire 2 et la réserve thermique 1, d'autre part les moyens d'échange tels que le plancher chauffant 33, le radiateur 38 et l'échangeur 26. En d'autres termes, ces éléments constituent des moyens de contrôle du couplage thermique entre la thermopompe 3 et son environnement.

De préférence, les moyens de contrôle de couplage, qui permettent de contrôler le couplage thermique entre la thermopompe 3 et son environnement, sont pilotés par des actionneurs et des moyens de commande 60 à processeur et programme enregistré. Des lignes de commande, non représentées sur la figure, relient les moyens de commande 60 aux actionneurs des pompes de circulation 7, 32, 34, 25 et des vannes d'orientation 23, 24.

Le programme contient notamment une séquence de chauffage par la thermopompe 3 à partir de la réserve thermique 1. La réserve thermique 1 se trouve normalement à basse température, c'est-à-dire à une température plus basse que celle du local à chauffer. Au cours de cette séquence de chauffage, la pompe de circulation 7 fait circuler le fluide caloporteur de captage dans la canalisation de captage 8 et dans l'échangeur 6, et la thermopompe 3 fonctionne en utilisant la réserve thermique 1 comme source froide. L'eau 1c et les autres matériaux 1b contenus dans la réserve thermique 1 sont alors refroidis, et les calories prélevées dans la réserve thermique 1 sont transférées dans les zones d'utilisation du local par le plancher chauffant 33, les radiateurs 38, l'échangeur 26. Dans les conditions climatiques de froid, l'eau 1c contenue dans la réserve thermique 1 peut passer de son état liquide à son état solide, sans que cela perturbe le fonctionnement du dispositif. Au contraire, le dispositif profite alors de la chaleur latente de liquéfaction de l'eau, qui assure une grande capacité calorifique de la réserve thermique 1 sans que sa température ne décroisse.

Le programme contient également une séquence de génération de la réserve thermique 1. Au cours de cette séquence, la pompe de circulation 7 fait circuler le fluide caloporteur de captage à la fois dans le capteur solaire 2 et dans l'échangeur 6. L'eau contenue dans la réserve thermique 1 est alors réchauffée par le capteur solaire 2 (ou par le capteur atmosphérique).

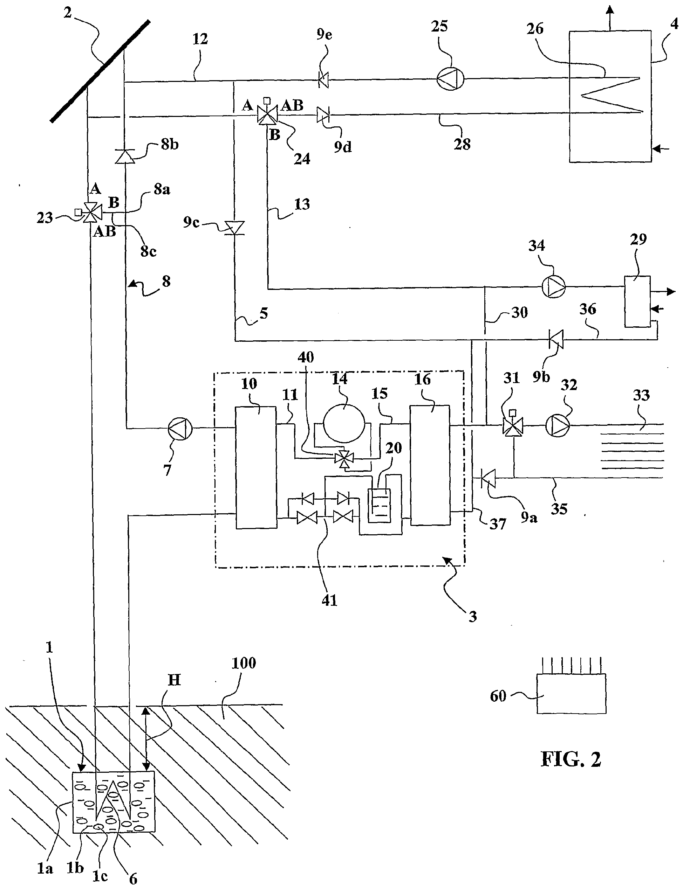

On considère maintenant la figure 2, qui illustre une variante réversible du dispositif de la figure 1. On retrouve les mêmes moyens, repérés par les mêmes références numériques. La différence avec le dispositif de la figure 1 réside essentiellement dans des moyens permettant de réaliser une thermopompe 3 réversible, grâce à une vanne d'inversion 40 et une structure 41 réalisant un détendeur bidirectionnel. Les radiateurs 38 de la figure 1 sont remplacés par des unités de climatisation 29.

Dans le mode de réalisation de la figure 2, la thermopompe 3 peut fonctionner de la façon décrite sur la figure 1, en utilisant la réserve thermique 1 comme source froide.

Pour un fonctionnement de climatisation, la thermopompe 3 est inversée, l'évaporateur 10 devenant le condenseur, le condenseur 16 devenant l'évaporateur. La thermopompe 3 utilise alors les unités de climatisation 29 comme source froide, et prélève dans l'atmosphère ambiante du local les calories qu'elle rejette ensuite dans la réserve thermique 1.

Au cours de la séquence de chauffage, les moyens de commande 60 à processeur et programme enregistré font fonctionner le compresseur 14 dans le sens provoquant la circulation du fluide frigorigène dans la direction illustrée par les flèches 50 et 51 sur la figure 1, entre l'évaporateur 10 et le condenseur 16. La pompe de circulation de captage 7 fait circuler le fluide caloporteur de captage entre l'évaporateur 10 et l'échangeur 6. En l'absence de rayonnement solaire (ou en cas de température extérieure plus basse que celle de la réserve thermique 1), la vanne d'orientation 23 court-circuite le capteur solaire 2 (ou l'échangeur atmosphérique), le fluide caloporteur de captage passant par la dérivation 8c. En présence de rayonnement solaire (ou en cas de température extérieure plus haute que celle de la réserve thermique 1), les moyens de commande 60 peuvent piloter la vanne d'orientation 23 pour obturer la dérivation 8c et faire passer le fluide caloporteur de captage à travers le capteur solaire 2 (ou à travers l'échangeur atmosphérique).

Au cours d'une séquence de régénération de la réserve thermique 1, la thermopompe 3 peut être stoppée, la pompe de circulation de captage 7 poursuivant son action pour forcer la circulation de fluide caloporteur de captage. La vanne d'orientation 23 obture la dérivation 8c, de sorte que le rayonnement solaire sur le capteur solaire 2 échauffe le fluide caloporteur de captage, et l'énergie thermique reçue par le capteur solaire 2 sert à réchauffer la réserve thermique 1.

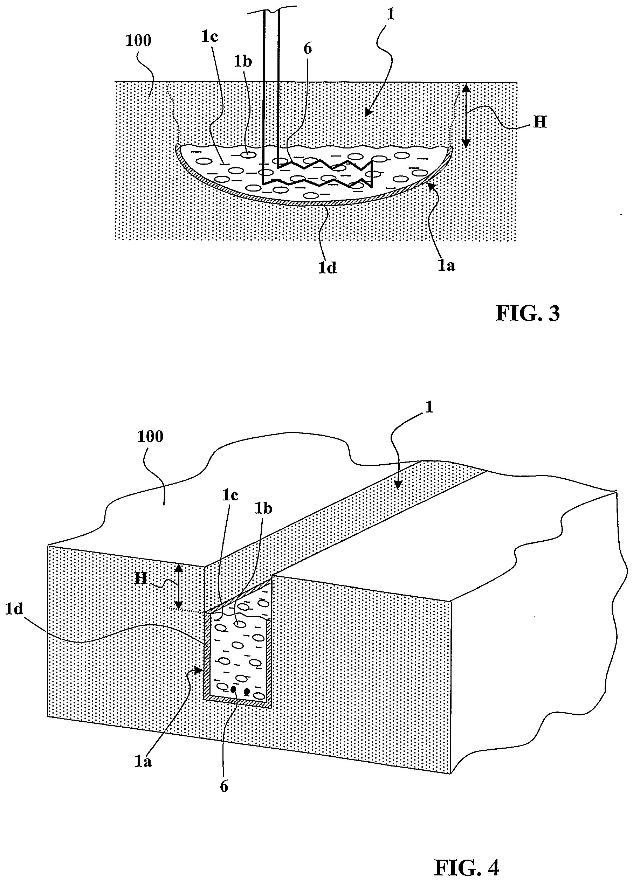

On considère maintenant les figures 3 et 4, qui illustrent deux modes de réalisation de la réserve thermique 1.

Dans l'un et l'autre des cas, la réserve thermique 1 est enfouie dans le sol 100, recouverte d'une hauteur H de terre.

Dans les deux cas, la réserve thermique 1 comprend une poche 1a sous terre, contenant un matériau 1b perméable et de l'eau 1c. Le matériau perméable 1b est un matériau naturel tel que le sable, la terre, le gravier, ou leurs mélanges.

Dans les deux cas également, la poche 1a comprend une enveloppe 1d, imperméable à l'eau. L'enveloppe 1d peut être une enveloppe plastifiée, une enveloppe en une matière plastique armée telle que le polyéthylène armé de fibres.

La poche 1a est ouverte vers le haut comme illustré sur les figures 3 et 4.

Sur la figure 3, la poche 1a est en forme de cuvette enterrée, avec des bords relevés pour retenir le matériau perméable 1b et l'eau 1c, autour de l'échangeur 6.

Sur la figure 4, la poche 1a, également ouverte vers le haut, est en forme de tranchée allongée dans le sol.

On comprend que la réalisation d'une telle réserve thermique est relativement peu onéreuse, car on utilise essentiellement un matériau disponible sur site.

Simultanément, une telle réserve thermique 1 contient un volume d'eau relativement important, qui permet de bénéficier non seulement de la grande chaleur massique de l'eau, mais également de la chaleur latente de liquéfaction de l'eau pour conférer à la réserve thermique 1 une grande capacité thermique dans de faibles variations de température, garantissant le maintien d'un rendement satisfaisant de la thermopompe. Simultanément, l'emprise au sol d'une telle réserve thermique 1 peut être beaucoup plus faible que celle des échangeurs horizontaux de même capacité.

L'installation selon l'invention fournit selon les besoins, simultanément ou non, le chauffage, et la production directe ou indirecte d'eau chaude sanitaire. La régulation gère l'ensemble automatiquement, avec actions sur les vannes d'orientation, pompes de circulation, compresseur.

L'invention n'est pas limitée aux thermopompes et capteurs solaires associés aux réserves thermiques. Elle trouve son application également dans les systèmes de thermopompe et capteurs solaires associés à des capteurs enterrés à faible profondeur (0,6 à 1,5m), à des capteurs par forages verticaux toutes profondeurs, et à des capteurs atmosphériques statiques ou ventilés à circulation d'eau.

L'application principale de l'invention se situe dans le chauffage, rafraîchissement et production d'eau chaude sanitaire des habitations.

La présente invention n'est pas limitée aux modes de réalisation qui ont été explicitement décrits, mais elle en inclut les diverses variantes et généralisations contenues dans le domaine des revendications ci-après.

## Revendications

1. Dispositif de chauffage et/ou de climatisation d'une habitation ou d'un local, comprenant une thermopompe (3) couplée thermiquement à un échangeur (6) enterré, dans lequel :
- l'échangeur (6) est contenu dans une réserve thermique (1) enterrée,
- la réserve thermique (1) comporte une poche (1a) sous terre, contenant un matériau perméable (1b) et de l'eau (1c), la poche (1a) étant soit en forme de cuvette enterrée retenant le matériau perméable (1b) et l'eau (1c) autour de l'échangeur (6), soit en forme de tranchée allongée dans le sol (100),
**caractérisé en ce que** :
- la poche (1a) comprend une enveloppe (1d) imperméable à l'eau,
- la poche (1a) est ouverte vers le haut, de façon que l'eau de pluie assure le maintien d'une quantité moyenne satisfaisante d'eau, et de façon à autoriser les variations de volume du contenu de la poche lors du gel et du dégel.

2. Dispositif selon la revendication 1, **caractérisé en ce que** le matériau perméable (1b) est un matériau naturel tel que le sable, la terre, le gravier ou leurs mélanges.

3. Dispositif selon l'une des revendications 1 ou 2, caractérisé en ce la poche (1a) est recouverte de terre.

4. Dispositif selon la revendication 3, **caractérisé en ce que** la poche (1a) est recouverte d'une hauteur (H) d'au moins 1 m de terre.

5. Dispositif selon la revendication 1, **caractérisé en ce que** l'enveloppe (1d) de la poche (1a) est plastifiée.

6. Dispositif selon l'une quelconque des revendications 1 à 5, **caractérisé en ce que** la poche (1a) est en forme de cuvette enterrée retenant le matériau perméable (1b) et l'eau (1c) autour de l'échangeur (6).

7. Dispositif selon l'une quelconque des revendications 1 à 5, **caractérisé en ce que** la poche (1a) est en forme de tranchée allongée dans le sol (100).

8. Dispositif selon l'une quelconque des revendications 1 à 7, **caractérisé en ce que** la thermopompe (3) est réversible.

9. Dispositif selon l'une quelconque des revendications 1 à 7, **caractérisé en ce que** le couplage thermique entre la thermopompe (3) et la réserve thermique (1) est assuré par un circuit de captage à pompe de circulation de captage (7) et à fluide caloporteur de captage.

10. Dispositif selon la revendication 9, **caractérisé en ce que** le circuit de captage comprend en outre une structure d'échange extérieure (2) parcourue par le fluide caloporteur de captage, avec une vanne de contrôle de débit (23) du fluide caloporteur de captage dans la structure d'échange extérieure (2).

11. Dispositif selon la revendication 10, **caractérisé en ce que** la structure d'échange extérieure comprend un échangeur atmosphérique air/fluide caloporteur, et/ou un capteur solaire (2).

12. Dispositif selon l'une quelconque des revendications 1 à 11, **caractérisé en ce qu'**il comprend en outre :
- des moyens d'échange thermique (33, 38) avec l'atmosphère intérieure du local à chauffer et/ou des moyens d'échange thermique (26) avec un circuit d'eau chaude sanitaire,
- un circuit de chauffage (35, 36, 28) à fluide caloporteur intermédiaire et pompe de circulation intermédiaire (32, 34, 25),
- des moyens de contrôle de débit de fluide caloporteur intermédiaire (31, 24) pour sélectivement assurer le couplage thermique des moyens d'échange thermique (33, 38, 26) par le fluide caloporteur intermédiaire soit avec la thermopompe (3), soit avec d'autres capteurs tels que des capteurs solaires (2) ou des échangeurs atmosphériques.

13. Dispositif selon l'une quelconque des revendications 1 à 12, **caractérisé en ce qu'**il comprend des moyens de contrôle de couplage thermique de captage (23, 7) pour contrôler le couplage thermique entre la thermopompe (3) et l'échangeur enterré (6), et des moyens de commande (60) à processeur et programme enregistré pour piloter lesdits moyens de contrôle de couplage thermique de captage (7, 23).

14. Dispositif selon la revendication 13, **caractérisé en ce que** le programme contient une séquence de chauffage par la thermopompe (3) à partir de la réserve thermique (1), au cours de laquelle l'eau (1c) contenue dans la réserve thermique (1) est refroidie et peut passer de son état liquide à son état solide.

15. Dispositif selon l'une des revendications 13 ou 14, **caractérisé en ce que** le programme contient une séquence de régénération de la réserve thermique (1), au cours de laquelle l'eau (1c) contenue dans la réserve thermique (1) est réchauffée par un capteur atmosphérique ou un capteur solaire (2).

## Patentansprüche

1. Vorrichtung zum Heizen und/oder Klimatisieren eines Wohnraums oder Lokals, umfassend eine Wärmepumpe (3), die thermisch mit einem erdverlegten Wärmetauscher (6) gekoppelt ist, wobei:
- der Wärmetauscher (6) innerhalb eines im Erdboden verlegten Wärmereservoirs (1) untergebracht ist,
- das Wärmereservoir (1) eine unterirdische Tasche (1a) hat, die ein permeables Material (1b) sowie Wasser (1c) enthält und entweder die Form einer erdverlegten Schale aufweist, in der das permeable Material (1b) und das Wasser (1c) den Wärmetauscher (6) umschließen, oder als längliche Rinne im Erdboden (100) ausgebildet ist,
**dadurch gekennzeichnet,**
- **dass** die Tasche (1a) einen wasserundurchlässigen Mantel (1d) hat,
- die Tasche (1a) nach oben offen ist, so dass das Regenwasser die Erhaltung einer ausreichenden mittleren Wassermenge gewährleistet und Volumenveränderungen des Tascheninhaltes sowohl beim Einfrieren als auch beim Auftauen ermöglicht werden.

2. Vorrichtung nach Anspruch 1, **dadurch gekennzeichnet, dass** das permeable Material (1b) aus einem natürlichen Material wie Sand, Erde, Kies oder Mischungen daraus besteht.

3. Vorrichtung nach Anspruch 1 oder 2, **dadurch gekennzeichnet, dass** die Tasche (1a) mit Erdreich bedeckt ist.

4. Vorrichtung nach Anspruch 3, **dadurch gekennzeichnet, dass** die Tasche (1a) über eine Höhe (H) von wenigstens 1m mit Erdreich bedeckt ist.

5. Vorrichtung nach Anspruch 1, **dadurch gekennzeichnet, dass** der Mantel (1d) der Tasche (1a) einen Kunststoffüberzug hat.

6. Vorrichtung nach einem der Ansprüche 1 bis 5, **dadurch gekennzeichnet, dass** die Tasche (1a) die Form einer erdverlegten Schale hat, in der das permeable Material (1b) und das Wasser (1c) den Wärmetauscher (6) umschließen.

7. Vorrichtung nach einem der Ansprüche 1 bis 5, **dadurch gekennzeichnet, dass** die Tasche (1a) die Form einer länglichen, im Erdboden (100) ausgebildeten Rinne hat.

8. Vorrichtung nach einem der Ansprüche 1 bis 7, **dadurch gekennzeichnet, dass** die Wärmepumpe (3) reversibel ist.

9. Vorrichtung nach einem der Ansprüche 1 bis 7, **dadurch gekennzeichnet, dass** die thermische Kopplung zwischen der Wärmepumpe (3) und dem Wärmereservoir (1) über eine Kollektorschaltung mit einer Umwälzpumpe (7) und einem flüssigen Kühlmittel erfolgt.

10. Vorrichtung nach Anspruch 9, **dadurch gekennzeichnet, dass** die Kollektorschaltung außerdem umfasst eine äußere, von dem flüssigen Kältemittel durchströmte Wärmetauscherstruktur (2) mit einem Steuerventil (23) für den Durchfluss des Kältemittels in der äußeren Wärmetauschersstruktur (2).

11. Vorrichtung nach Anspruch 10, **dadurch gekennzeichnet, dass** die äußere Wärmetauscherstruktur einen Umgebungsluft/Kälteflüssigkeit-Wärmetauscher und/oder einen Sonnenkollektor (2) aufweist.

12. Vorrichtung nach einem der Ansprüche 1 bis 11, **dadurch gekennzeichnet, dass** diese ferner umfasst:
- Mittel (33, 38) für den Wärmeaustausch mit der Innenluft des zu heizenden Lokals und/oder Mittel (26) für den Wärmeaustausch mit einem Warmwasser-Sanitärkreislauf,
- einen Heizkreislauf (35, 36, 28) mit Zwischenkältemittel und Zwischenumwälzpumpe (32, 34, 25),
- Mittel zur Durchflusssteuerung (31, 24) des flüssigen Zwischenkältemittels zur selektiven thermischen Kopplung der Wärmeaustauschmittel (33, 38, 26) durch das flüssige Zwischenkältemittel entweder mit der Wärmepumpe (3) oder mit anderen Kollektoren wie beispielsweise Sonnenkollektoren (2) oder Luftwärmetauschern.

13. Vorrichtung nach einem der Ansprüche 1 bis 12, **dadurch gekennzeichnet, dass** diese Mittel aufweist zur Steuerung der thermischen Kopplung der Wärmeaufnahme (23, 7) zwischen der Wärmepumpe (3) und dem erdverlegten Wärmetauscher (6) sowie Antriebsmittel (60) mit Prozessor und Speicherprogramm für die Steuerung der Steuermittel für die thermische Kopplung der Wärmeaufnahme (7, 23).

14. Vorrichtung nach Anspruch 13, **dadurch gekennzeichnet, dass** das Programm eine Heizsequenz durch die Wärmepumpe (3) nach dem Wärmereservoir (1) hat, während der das in dem Wärmereservoir (1) enthaltene Wasser (1c) gekühlt wird und von seinem flüssigen Zustand in den festen Zustand übergehen kann.

15. Vorrichtung nach Anspruch 13 oder 14, **dadurch gekennzeichnet, dass** das Programm eine Sequenz zur Regeneration des Wärmereservoirs (1) hat, während der das in dem Wärmereservoir (1) enthaltene Wasser (1c) durch einen Luftwärmetauscher oder einen Sonnenkollektor (2) erwärmt wird.

## Claims

1. Heating and/or air conditioning device for a home or other space, including a heat pump (3) thermally coupled to a buried heat exchanger (6), in which :
- the heat exchanger (6) is contained in a buried thermal storage tank (1),
- the thermal storage tank (1) includes an underground pocket (1a) containing a permeable material (1b) and water (1c), the pocket (1a) is open at the top, in the form of a buried cup retaining the permeable material (1b) and the water (1c) around the heat exchanger (6), or in a shape of an elongate trench in the soil (100),
**characterized in that** :
- the pocket (1a) includes an envelope (1d) that is impermeable to water,
- the pocket (1a) is open at the top, so as to allow the rainwater to assure the retain of an average amount of water, and so as to allow the volume variations of the content of the pocket during freeze up and breakup.

2. Device according to claim 1, **characterized in that** the permeable material (1b) is a natural material such as sand, earth, gravel or mixtures thereof.

3. Device according to either of claims 1 or 2, **characterized in that** the pocket (1a) is covered with earth.

4. Device according to claim 3, **characterized in that** the pocket (1a) is covered with earth to a height (H) of at least 1 m.

5. Device according to claim 1, **characterized in that** the envelope (1d) of the pocket (1a) is plasticized.

6. Device according to any one of claims 1 to 5, **characterized in that** the pocket (1a) is in the shape of a buried cup retaining the permeable material (1b) and the water (1c) around the heat exchanger (6).

7. Device according to any one of claims 1 to 5, **characterized in that** the pocket (1a) is in the form of an elongate trench in the soil (100).

8. Device according to any one of claims 1 to 7, **characterized in that** the heat pump (3) is reversible.

9. Device according to any one of claims 1 to 7, **characterized in that** the thermal coupling between the heat pump (3) and the thermal storage tank (1) is provided by a collection circuit with a collection circulator pump (7) using a collection heat exchange fluid.

10. Device according to claim 9, **characterized in that** the collection circuit further includes an outdoor heat exchange structure (2) through which the collection heat exchange fluid flows, with a valve (23) for controlling the flowrate of the collection heat exchange fluid in the outdoor heat exchange structure (2).

11. Device according to claim 10, **characterized in that** the outdoor heat exchange structure includes an atmospheric air/heat exchange fluid heat exchanger, and/or a solar collector (2).

12. Device according to any one of claims 1 to 11, **characterized in that** it further includes:
- means (33, 38) for exchange of heat with the indoor atmosphere of the space to be heated and/or means (26) for exchange of heat with a domestic hot water circuit,
- a heating circuit (35, 36, 28) using an intermediate heat exchange fluid and an intermediate circulator pump (32, 34, 25),
- means (31, 24) for controlling the flowrate of the intermediate heat exchange fluid to provide selective thermal coupling of the heat exchange means (33, 38, 26) via the intermediate heat exchange fluid either with the heat pump (3) or with other collectors such as solar collectors (2) or atmosphere heat exchangers.

13. Device according to any one of claims 1 to 12, **characterized in that** it includes collection thermal coupling control means (23, 7) for controlling the thermal coupling between the heat pump (3) and the buried heat exchanger (6), and processor-based stored program control means (60) for driving said collection heat exchange coupling control means (7, 23).

14. Device according to claim 13, **characterized in that** the program includes a sequence of heating by the heat pump (3) from the thermal storage tank (1) during which the water (1c) contained in the thermal storage tank (1) is cooled and can go from its liquid state to its solid state.

15. Device according to either of claims 13 or 14, **characterized in that** the program includes a sequence of regeneration of the thermal storage tank (1), during which the water (1c) contained in the thermal storage tank (1) is overheated by an atmosphere collector or a solar collector (2).
